# EUROPÄISCHE PATENTSCHRIFT

(11) **EP 2 746 663 B1**
(45) Veröffentlichungstag und Bekanntmachung des Hinweises auf die Patenterteilung: **31.05.2017**
(21) Anmeldenummer: 13196972.7
(22) Anmeldetag: 12.12.2013
(51) Int. Cl.: F23J 11/00, F16L 7/00, F23J 13/04

(54) **Vorrichtung zum Festlegen einer Rohreinheit**
Device for fixing a pipe
Dispositif de fixation d'un tuyau

(30) Priorität: 19.12.2012 DE 102012112655
(43) Veröffentlichungstag der Anmeldung: 25.06.2014
(73) Patentinhaber: Bächle, Dieter, 8597 Landschlacht (CH)
(72) Erfinder: Bächle, Dieter, 8597 Landschlacht (CH)
(74) Vertreter: Wagner, Kilian

(56) Entgegenhaltungen:
- EP-A2- 2 584 237
- DE-A1-102012 102 545
- DE-U1- 20 003 980
- DE-U1-202006 009 426
- DE-U1-202006 013 554
- DE-U1-202007 017 476

## Beschreibung

Die Erfindung betrifft eine Vorrichtung zum Festlegen, insbesondere Zentrieren, einer Rohreinheit, insbesondere in einem Schacht eines Gebäudes, bevorzugt eines Wohngebäudes, nach dem Oberbegriff des Anspruchs 1, sowie ein System gemäß Anspruch 12.

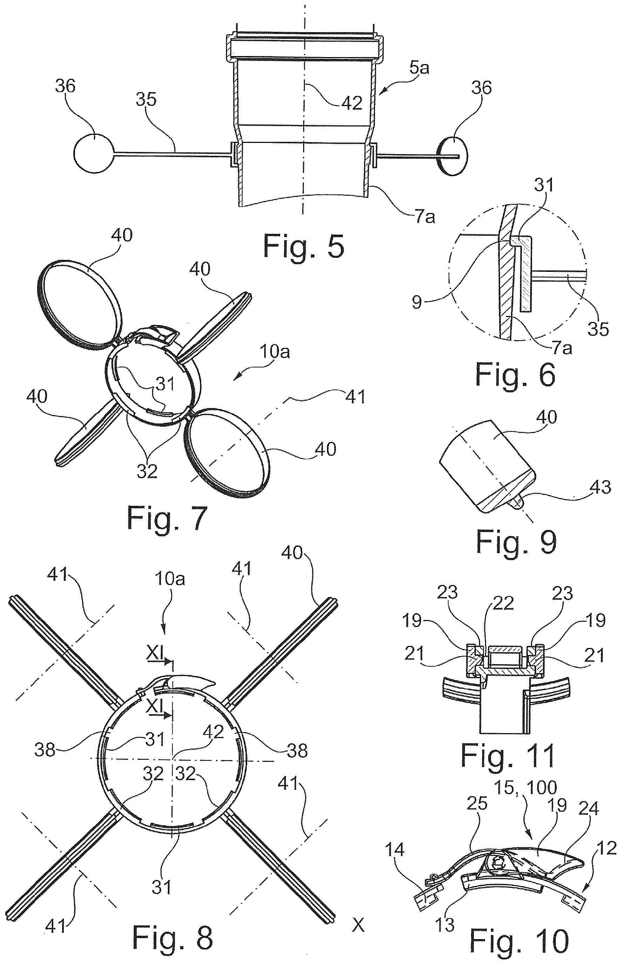

Eine derartige Vorrichtung ist aus der DE 20 2007 017 476 U1 des Anmelders bekannt. Sie dient insbesondere in Wohnbauten dazu, Rohre, die zur Ausleitung von Abgasen von Heizungsanlagen dienen, innerhalb eines Schachtes zu führen. Dabei soll die in der Praxis aus mehreren Rohrelementen zusammengesetzte Rohreinheit mit Abstand zu der Wand des Schachtes angeordnet sein. Dies erfolgt zum einen, um eine optimale Kühlung der Rohreinheit zu erzielen, damit diese über den gesamten Umfang in Kontakt mit der Umgebungsluft stehen kann, und zum anderen, damit zwischen dem Abgasrohr und dem Schacht ein ringförmiger Raum ausgebildet wird, über den z.B. die Heizungsanlagen mit Frischluft versorgt werden kann. Aus der genannten Schrift sind bereits verschiedene Ausführungen der Vorrichtung, insbesondere dessen manschettenartigen Elements, bekannt. So ist aus der Fig. 11 der genannten Schrift eine Ausbildung der beiden miteinander zusammenwirkenden Endbereiche des manschettenartigen Elements bekannt, bei der diese eine Rastverbindung ausbilden, indem ein an dem einen Endbereich angeformter Rasthaken in eine entsprechend ausgebildete Aufnahme am anderen Endbereich des manschettenartigen Elements einführbar ist und dort in der Verriegelungsstellung verrastet.

Bei derartigen Vorrichtungen besteht insbesondere die Problematik, dass die Befestigung der Vorrichtung an der Rohreinheit bzw. an den Rohrelementen möglichst einfach erfolgen soll, d.h. mit möglichst wenig Kraftauf wand und derart, dass die Verbindung zwischen der Vorrichtung und der Rohreinheit einfach wieder gelöst werden kann.

Darüber hinaus ist die Zugänglichkeit zu insbesondere den Endbereichen des manschettenartigen Elements oftmals erschwert, insbesondere, wenn die Montage der Vorrichtung innerhalb des Schachtes erfolgen muss. Dadurch ist es für einen Monteur bzw. Bediener oftmals schwer, die beiden Endbereiche des manschettenartigen Elements zu greifen bzw. diese in gewünschter Art und Weise zusammenzuführen (bei einer Ausbildung mit einer Rastverbindung) sowie die zum Ausbilden der Rastverbindung benötigte Kraft in die Endbereiche einzubringen.

Darüber hinaus besteht die Gefahr, dass sich das manschettenartige Element trotz aneinander fixierter Endbereiche axial entlang der Rohreinheit verschieben lässt, insbesondere wenn dieses an einem Glattrohrabschnitt der Rohreinheit lösbar festgelegt wird.

Aus der DE 10 2012 102 545 A1 ist eine Kupplungseinrichtung zum Verbinden zweier Frischluftrohre mit einer axial durchgehenden ebenen Anlagefläche bekannt.

Die DE 200 03 980 U1 zeigt eine Vorrichtung zum Zentrieren einer Abgasrohrleitung in einem Schacht, wobei die Vorrichtung dazu ausgelegt ist einen Ringwulst des Abgasrohres zu umschließen.

Die DE 20 2006 009 426 U1 beschreibt ebenfalls eine Vorrichtung zum Zentrieren eines Abgasrohres in einem Schacht, wobei zwei Hälften eines manschettenartigen Elementes miteinander verrastbar sind, derart, dass das manschettenartige Element mit zwei beabstandeten, nach radial innen weisenden Ringwulsten in zwei beabstandete Wellentäler zu Zwecken der axialen Sicherung eingreift.

Die DE 20 2006 013 554 U1 zeigt eine Vorrichtung zum Verbinden eines zweier gegeneinander beweglicher Rohrleitungsstücke.

Die nachveröffentlichte EP 2 584 237 A2 zeigt eine Zentriervorrichtung für Abgasrohre mit einer Schnallen-Spanneinrichtung.

In Kenntnis des genannten Stands der Technik hat sich der Erfinder die Aufgabe gestellt, eine Vorrichtung zum Festlegen einer Rohreinheit nach dem Oberbegriff des Anspruchs 1 derart weiterzubilden, dass ein sicherer Halt des manschettenartigen Elements an einer Rohreinheit sichergestellt ist. Bevorzugt soll zu dem auch eine besonders einfache Handhabung der Vorrichtung an der Rohreinheit ermöglicht werden. Unter einer besonders einfachen Handhabung wird dabei ein besonders einfaches Ausbilden einer Verriegelungsstellung der Vorrichtung an der Rohreinheit bzw. ein besonders einfaches Wiederlösen der Vorrichtung von der Rohreinheit, auch unter räumlich erschwerten Bedingungen, verstanden, wobei gleichzeitig mit einer möglichst geringen Betätigungskraft eine hohe Spannkraft erzielt werden soll, die die beiden Endabschnitte des manschettenartigen Elements gegen- bzw. übereinander bewegt, so dass ein sicherer Halt an der Rohreinheit ermöglicht wird.

Diese Aufgabe wird erfindungsgemäß mit einer Vorrichtung zum Festlegen einer Rohreinheit, insbesondere als Bestandteil einer Heizungsanlage, mit den Merkmalen des Anspruchs 1 gelöst. Erfindungsgemäß ist die Erstreckung der Anlagefläche senkrecht zu deren Umfangserstreckung, d.h. bezogen auf die Axialerstreckung der Rohreinheit die axiale Erstreckung der Anlagefläche, geringer ist als die maximale Erstreckung des manschettenartiges Elementes (in einem auf demselben Radius liegenden, radial beabstandeten Bereich) in dieser (axialen bzw. senkrechten) Richtung. Mit anderen Worten ist erfindungsgemäß vorgesehen, dass das manschettenartige Element derart konturiert ist, dass die Breite der Anlagefläche (in axialer Richtung, d.h. senkrecht zur Umfangserstreckung) geringer ist als eine maximale Breitenerstreckung des manschettenartigen Elementes, um hierdurch den Flächendruck des manschettenartigen Elementes auf die Rohreinheit in der Verriegelungsstellung der Endbereiche des manschettenartigen Elementes zu erhöhen, mit der Folge, dass der Halt des manschettenartigen Elementes an der Rohreinheit verbessert wird und insbesondere ein unbeabsichtigtes Verschieben oder Wandern des manschettenartigen Elementes entlang der Rohreinheit vermieden, zumindest jedoch erschwert wird. Bevorzugt ist vorstehende Bedingung einer geringeren Axialerstreckung der Anlageflächen im Vergleich zur konischen Axialerstreckung in einem radial zur Anlagefläche beabstandeten Bereich über mindestens 50% der Umfangserstreckung, bevorzugt über mindestens 80% noch weiter bevorzugt über 90% der Umfangserstreckung des manschettenartigen Elements realisiert.

Durch die erfindungsgemäße Ausgestaltung des manschettenartigen Elementes bzw. der eine geringe Axialerstreckung aufweisenden Anlagefläche ist es möglich und bevorzugt, die Vorrichtung, insbesondre durch Verspannen an einem glatten Rohrabschnitt der Rohreinheit festzulegen, also nicht derart, dass die Anlagefläche in eine äußere Vertiefung eingreift, sondern außen an einem, sich axial bevorzugt über mindestens 10 cm erstreckenden Zylindermantelwandabschnitt abstützt. Durch die vergleichsweise in axialer Richtung betrachtet schmale Anlagefläche wird eine hohe Flächenpressung erreicht und die Vorrichtung kann sich in axialer Richtung verkanten, so dass diese nicht mehr oder nur mit sehr hohem Kraftaufwand axial verschieblich ist.

Um die Rohreinheit innerhalb eines Schachtes zentrisch ausrichten zu können, sind mehrere, vorzugsweise drei oder vier, bevorzugt in gleichmäßigen Winkelabständen zueinander angeordnete, radial abstehende Organe vorgesehen, die in Längsrichtung der Vorrichtung betrachtet radial elastisch verformbar ausgebildet sind. Dadurch ist nicht nur eine zentrische Anordnung der Rohreinheit innerhalb des Schachtes möglich, sondern die Vorrichtung passt sich ohne weitere Maßnahmen automatisch unterschiedlichen Öffnungsweiten bzw. Querschnitten des Schachtbereichs an.

Erfindungsgemäß sind die Endbereiche des manschettenartigen Elements zum Fixieren der Klemmvorrichtung an der Rohreinheit ausgebildet, um zusammen in der Verriegelungsrichtung einen Klemm- oder Formschluss mit der Rohreinheit auszubilden. Bevorzugt ist eine Klemmverbindung, bei der die Anlagefläche diese Rohreinheit an einen Glattrohrabschnitt klemmt.

Erfindungsgemäß ist weiter vorgesehen, dass sich das manschettenartige Element zumindest in einem radial inneren Bereich des Elements nach radial innen hin zu der Anlagefläche verjüngt, derart, dass das manschettenartige Element in einer Querschnittsansicht, (zumindest in dem radial inneren Bereich) zumindest näherungsweise dreieckförmig konturiert ist, wobei es bevorzugt ist, wenn die vorgenannte dreieckige Querschnittsform gerundete Ecken aufweist.

Gemäß der Erfindung ist mit Vorteil zudem vorgesehen, dass sich die (schmale) Anlagefläche zumindest näherungsweise in der axialen Mitte des manschettenartigen Elementes befindet. Mit anderen Worten erstreckt sich bevorzugt das manschettenartige Elemente axial, d.h. senkrecht zur Umfangserstreckung gleichmäßig zu zwei Seiten über die Anlagefläche hinaus.

Vorteilhafte Weiterbildungen der erfindungsgemäßen Vorrichtung zum Festlegen einer Rohreinheit sind in den Unteransprüchen aufgeführt.

In Weiterbildung der Erfindung ist mit Vorteil vorgesehen, dass die Axialerstreckung der Anlagefläche bezogen auf die Längserstreckung der Rohreinheit so gering ist, dass die Anlagefläche zumindest näherungsweise linienförmig ist. Bevorzugt beträgt hierzu die Senkrechte (axiale Erstreckung) der Anlagefläche weniger als 4mm, vorzugsweise weniger als 3mm.

Ganz besonders bevorzugt ist es, wenn eine nach dem Konzept der Erfindung ausgebildete Anlagefläche auch im Bereich einer Spanneinrichtung zum Verspannen der Vorrichtung an der Rohreinheit vorgesehen ist. Bevorzugt befindet sich hierzu in einem radial inneren Bereich der Spanneinrichtung ein Verjüngungsabschnitt, der sich hin zu der bevorzugt linienförmigen Anlagefläche verjüngt, um auch im Bereich der Spanneinrichtung eine hohe Flächenpressung zu erreichen.

In einer ersten konstruktiven Ausgestaltung der Spanneinrichtung wird vorgeschlagen, diese als Klemmschnallenverbindung auszubilden. Eine derartige Klemmschnallenverbindung hat den Vorteil, dass sie für einen Anwender sehr einfach und intuitiv bedienbar ist, da er derartige Verbindungen üblicherweise aus anderen, alltäglichen Anwendungen kennt.

In konstruktiv besonders bevorzugter Ausgestaltung der Klemmschnallenverbindung wird vorgeschlagen, dass die Klemmschnallenverbindung einen an einem ersten Endbereich des manschettenartigen Elements schwenkbar befestigten Bügel aufweist, an dem ein Halteelement einstückig angeformt ist, das auf der dem zweiten Endbereich des manschettenartigen Elements zugewandten Seite eine Ausnehmung aufweist, die mit einem am zweiten Endbereich des manschettenartigen Elements einstückig angeformten Fortsatz zusammenwirkt.

Eine besonders einfache Befestigung des Bügels der Klemmschnallenverbindung ohne zusätzliche Befestigungsteile wird ermöglicht, wenn der Bügel zwei zapfenartige Fortsätze aufweist, die in im manschettenartigen Element ausgebildete Aufnahmeöffnungen eingreifen.

Um ein besonders einfaches Greifen der Vorrichtung im Bereich seines manschettenartigen Elements zu ermöglichen, damit ein Wiederlösen der Vorrichtung von der Rohreinheit besonders einfach ermöglicht wird, wird vorgeschlagen, dass der Bügel eine Griffplatte aufweist, die in der Verriegelungsstellung der Klemmschnallenverbindung vom manschettenartigen Element schräg absteht und dadurch von beiden Seiten greifbar ist.

In einer alternativen Ausgestaltung der Klemmschnallenverbindung umfasst diese eine Doppelgelenkschnalle mit einem Haltebügel und einem am Haltebügel im Bereich einer Achse gelenkig angeordneten Spannbügel. Die Verwendung einer Doppelgelenkschnalle ermöglicht über eine Variation der Länge des Halte- und Spannbügels eine einfache Anpassung der Öffnungsweite der (geöffneten) Spanneinrichtung sowie eine Beeinflussung der Betätigungskräfte zum Schließen der Spanneinrichtung.

In bevorzugter Ausgestaltung der Doppelgelenkschnalle, die eine besonders einfache Herstellung und Montage der Doppelgelenkschnalle ermöglicht, wird vorgeschlagen, dass der Haltebügel und der Spannbügel der Doppelgelenkschnalle über eine Rastverbindung miteinander verbunden sind, wobei der Haltebügel einen Halteabschnitt aufweist, der die Achse umgreift, und wobei der Halteabschnitt eine Öffnung zum Einführen der Achse aufweist, deren Öffnungsweite größer ist als der Durchmesser der Achse.

In einer alternativen Ausgestaltung der Spanneinrichtung ist es vorgesehen, dass die Spanneinrichtung zum Ausbilden einer Rastverbindung zwischen den Endbereichen des manschettenartigen Elements dient, wobei die Spanneinrichtung ein Betätigungselement umfasst, das in Wirkverbindung mit einer an einem Endbereich des manschettenartigen Elements ausgebildeten ersten Verzahnungsgeometrie zusammenwirkt. Das Betätigungselement dient somit dazu, beispielsweise bei einem Schwenken des Betätigungselements ein Zusammenziehen der beiden Endbereiche zu ermöglichen. Dabei lässt sich durch eine entsprechende Größe bzw. Geometrie des Betätigungselements eine Kraftverstärkung erzielen.

Ganz besonders bevorzugt ist eine konstruktive Ausgestaltung, bei der das Betätigungselement einen mit der ersten Verzahnungsgeometrie zusammenwirkenden Abschnitt aufweist, der mit der ersten Verzahnungsgeometrie in Art einer Ratsche zusammenwirkt, so dass bei einer Bewegung des Betätigungselements in die eine Richtung sich der Umfang des Elements verringert, und bei einer Bewegung des Betätigungselements in die andere, entgegengesetzte Richtung das Element seinen Umfang beibehält. Dadurch wird ein kontinuierliches Spannen bzw. eine kontinuierliche Umfangsverringerung des manschettenartigen Elements bewirkt, wobei insbesondere beim Zurückschwenken des Betätigungselements ein sich Wiederlösen der Vorrichtung von der Rohreinrichtung sicher vermieden wird.

In einer ersten konstruktiven Ausgestaltung des Betätigungselements ist es vorgesehen, dass diese in Form einer hin- und herschwenkbaren Betätigungsplatte ausgebildet ist. Eine derartige Ausbildung hat den Vorteil, dass sie für einen Bediener gut erkennbar und in ihrer Funktion intuitiv erfassbar und sich somit besonders leicht bedienen lässt. Darüber hinaus kann eine derartige Betätigungsplatte beispielsweise durch eine entsprechende Ausgestaltung besonders gut greifbar bzw. fassbar sein.

Eine mechanisch besonders stabile Ausgestaltung der Vorrichtung bei Verwendung einer Betätigungsplatte wird erzielt, wenn diese im Bereich eines Abstandshalteorgans angeordnet und schwenkbar an diesem befestigt ist.

In alternativer Ausgestaltung zu einer Betätigungsplatte kann es auch vorgesehen sein, dass das Betätigungselement durch ein Abstandshalteorgan selbst ausgebildet ist, das mit dem manschettenartigen Element verbunden ist. In diesem Fall wird durch das Hin- und Herschwenken des Abstandshalteorgans die benötigte Spannkraft auf das manschettenartige Element übertragen, wobei sich mit einer derartigen Ausgestaltung besonders günstige Hebelverhältnisse erzielen lassen, die eine große Verstärkung der manuellen Betätigungskraft ermöglichen.

Zur axialen Festlegung bzw. Fixierung der Rohreinheit an der Vorrichtung wird darüber hinaus eine konstruktive Ausbildung vorgeschlagen, bei der das manschettenartige Element eine radial umlaufende Wand aufweist, und dass von der Wand wenigstens ein radial nach innen ragender Halteabschnitt ausgeht, der in der Verriegelungsstellung der Klemmschnallenverbindung mit der Rohreinheit eine formschlüssige, die Rohreinheit in Axialrichtung festsetzende Verbindung ausbildet.

Ganz besonders bevorzugt ist dabei eine Ausgestaltung, bei der im Bereich beider Stirnseiten des manschettenartigen Elements jeweils mehrere, vorzugsweise in gleichgroßen Winkelabständen zueinander angeordnete, teilsegmentartige Halteabschnitte vorgesehen sind, die jeweils flanschartig ausgebildet sind, und dass die Halteabschnitte an den beiden Stirnseiten radial versetzt zueinander angeordnet sind. Mit einer derartigen Ausbildung lassen sich insbesondere sowohl Rohrabschnitte axial fixieren, die in Art eines Wellrohres ausgebildet sind, als auch Rohrabschnitte, die muffenartig (mit einer Einschnürung) ausgebildet sind.

In einer bevorzugten Ausgestaltung der abstehenden Organe, die darüber hinaus eine besonders einfache und wirtschaftlich günstige Herstellbarkeit der Vorrichtung ermöglichen, wird vorgeschlagen, dass die abstehenden Organe als Klemmringe ausgebildet sind, deren Längsachsen senkrecht zur Längsachse des manschettenartigen Elements verlaufen, und dass die Klemmringe als separate Bauteile ausgebildet sind, die über eine formschlüssig ausgebildete Rastverbindung mit dem manschettenartigen Element verbunden sind.

In Weiterbildung der Erfindung ist mit Vorteil vorgesehen, dass der die erste Verzahnungsgeometrie aufweisende Endabschnitt auf der der ersten Verzahnungsgeometrie gegenüberliegenden Seite eine zweite Verzahnungsgeometrie aufweist, die mit einer Gegenverzahnung an dem anderen Endabschnitt des manschettenartigen Elements zusammenwirkt.

In Weiterbildung der Erfindung ist mit Vorteil vorgesehen, dass das Betätigungselement in Form einer hin- und herschwenkbaren Betätigungsplatte ausgebildet ist.

In Weiterbildung der Erfindung ist mit Vorteil vorgesehen, dass die Betätigungsplatte im Bereich eines Organs angeordnet und schwenkbar an diesem befestigt ist.

In Weiterbildung der Erfindung ist mit Vorteil vorgesehen, dass das Betätigungselement durch ein Organ gebildet ist, das über einen Verbindungsabschnitt mit dem manschettenartigen Element verbunden ist.

In Weiterbildung der Erfindung ist mit Vorteil vorgesehen, dass die abstehenden Organe als Klemmringe ausgebildet sind, deren Längsachsen senkrecht zur Längsachse des manschettenartigen Elements verlaufen, und dass die Klemmringe als separate Bauteile ausgebildet sind, die über eine formschlüssig ausgebildete Rastverbindung mit dem manschettenartigen Element verbunden sind.

In Weiterbildung der Erfindung ist mit Vorteil vorgesehen, dass die abstehenden Organe als Klemmringe ausgebildet sind, die um einen Winkel (α) in Bezug zu einer an Befestigungsort der Klemmringe an dem Element angeordneten, die Längsachse schneidenden Geraden geschwenkt sind, und dass die Klemmringe, zusammen mit dem Element als einteiliges Bauteil als Spritzgussteil ausgebildet sind.

In Weiterbildung der Erfindung ist mit Vorteil vorgesehen, der Winkel (α) zwischen 5° und 45°, bevorzugt zwischen 10° und 30°, ganz besonders bevorzugt zwischen 15° und 20° beträgt.

In Weiterbildung der Erfindung ist mit Vorteil vorgesehen, dass das manschettenartige Element eine radial umlaufende Wand aufweist, und dass von der Wand wenigstens ein radial nach innen ragender Halteabschnitt ausgeht, der in der Verriegelungsstellung der Klemmschnallenverbindung mit der Rohreinheit eine formschlüssige, die Rohreinheit in Axialrichtung fixierende Verbindung ausbildet.

In Weiterbildung der Erfindung ist mit Vorteil vorgesehen, dass im Bereich beider Stirnseiten des manschettenartigen Elements mehrere, vorzugsweise in gleichgroßen Winkelabständen zueinander angeordnete, teilsegmentartige Halteabschnitte vorgesehen sind, die jeweils flanschartig ausgebildet sind, und dass die Halteabschnitte an den beiden Stirnseiten radial versetzt zueinander angeordnet sind.

In Weiterbildung der Erfindung ist mit Vorteil vorgesehen, dass in Längsrichtung des manschettenartigen Elements (betrachtet halteabschnittfreie Bereiche ausgebildet sind, die über die gesamte Längserstreckung des manschettenartigen Elements verlaufen.

Besonders einfach und preiswert lässt sich eine erfindungsgemäße Vorrichtung herstellen, wenn das manschettenartige Element und die Spanneinrichtung vollständig aus Kunststoff bestehen. Insbesondere wird bei einer derartigen vollständigen Ausbildung aus Kunststoff auch eine Korrosion der Vorrichtung, zum Beispiel an Scharnierteilen, zuverlässig vermieden, so dass ein Wiederlösen der Vorrichtung von der Rohreinheit auch nach einem relativ langen Zeitraum, z.B. nach einigen Jahren, problemlos möglich ist.

Die Erfindung führt auch auf ein System, umfassend eine nach dem Konzept der Erfindung ausgebildete Vorrichtung sowie eine Rohreinheit, an der die Vorrichtung festgelegen ist. Aufgrund der erfindungsgemäßen, bevorzugt zumindest näherungsweise linienförmigen Gestaltung der Anlagefläche der Vorrichtung bzw. des manschettenartigen Elementes der Vorrichtung ist vorgesehen das manschettenartige Element in einem (normalen) Zylindermantelflächenabschnitt, d. h. glatten bzw. vertiefungsfreien Rohrabschnitt der Rohreinheit anzuordnen, wobei durch die erfindungsgemäße Gestaltung der Anlagefläche ein ausreichend großer Flächendruck erzeugt wird, der ein Verschieben der Vorrichtung axial entlang der Rohreinheit zumindest erschwert.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine perspektivische Ansicht auf eine Vorrichtung zum Befestigen einer Rohreinheit bei einer ersten Ausführungsform jedoch ohne erfindungsgemäße schmale Anlagefläche, zu Erläuterungszwecken
- Fig. 2: einen Längsschnitt durch die Vorrichtung gemäß Fig. 1,
- Fig. 3: ein Detail der Vorrichtung gemäß Fig. 2 im Befestigungsbereich der Vorrichtung mit einem Rohrelement,
- Fig. 4: die nicht erfindungsgemäße Vorrichtung gemäß Fig. 1 bei Verwendung an einem gegenüber den Fig. 1 bis 3 modifizierten Rohrelement in perspektivischer Ansicht,
- Fig. 5: einen Längsschnitt durch die Vorrichtung gemäß Fig. 4,
- Fig. 6: ein Detail der Fig. 5 in vergrößerter Darstellung,
- Fig. 7: eine gegenüber den Fig. 1 bis 6 modifizierte Ausführungsform in perspektivischer Ansicht, jedoch ohne erfindungsgemäße schmale Anlagefläche, zu Erläuterungszwecken,
- Fig. 8: einen Querschnitt durch die Vorrichtung gemäß Fig. 7,
- Fig. 9: ein Detail der Fig. 8 im Bereich eines Klemmrings in vergrößerter Darstellung,
- Fig. 10: den Bereich der Klemmschnallenverbindung in Seitenansicht,
- Fig. 11: einen Schnitt in der Ebene XI - XI der Fig. 8,
- Fig. 12: eine perspektivische Ansicht auf eine gegenüber Fig. 1 alternative nicht erfindungsgemäße Vorrichtung zum Befestigen einer Rohreinheit, jedoch ohne erfindungsgemäße schmale Anlagefläche, zu Erläuterungszwecken,
- Fig. 13: eine perspektivische Teilansicht einer mit einer Betätigungsplatte ausgestatteten Spanneinrichtung, wie sie bei der Vorrichtung gemäß Fig. 12 verwendet wird,
- Fig. 14: einen Schnitt durch Vorrichtung gemäß Fig. 12 im Bereich der Betätigungsplatte,
- Fig. 15: ein Detail der Fig. 14 in vergrößerter Darstellung,
- Fig. 16: eine perspektivische Teilansicht auf eine Spanneinrichtung, bei der diese mit einem Haltering betätigt wird,
- Fig. 17: einen Querschnitt gegenüber einer der Fig. 8 modifizierten Vorrichtung zum Befestigen einer Rohreinheit, bei der Distanzringe in einem schrägen Winkel zum manschettenartigen Element angeordnet sind, jedoch ohne erfindungsgemäße schmale Anlagefläche,
- Fig. 18: eine perspektivische Ansicht auf eine gegenüber der Fig. 1 modifizierte Vorrichtung unter Verwendung der Doppelgelenkschnalle, jedoch ohne erfindungsgemäße schmale Anlagefläche,
- Fig. 19: eine Ansicht auf die Doppelgelenkschnalle bei der Vorrichtung gemäß Fig. 18
- Fig. 20: einen Schnitt durch die Doppelgelenkschnalle gemäß Fig. 19, und
- Fig. 21 bis Fig. 26: ein bevorzugtes Ausführungsbeispiel einer Vorrichtung zum Befestigen einer Rohreinheit, wobei die Vorrichtung gemäß dem Ausführungsbeispiel in den Fig. 21 bis 26 mit einer nach dem Konzept der Erfindung ausgebildeten Anlagefläche ausgestattet ist.

Gleiche Bauteile bzw. Bauteile mit gleicher Funktion sind in den Figuren mit den gleichen Bezugsziffern versehen.

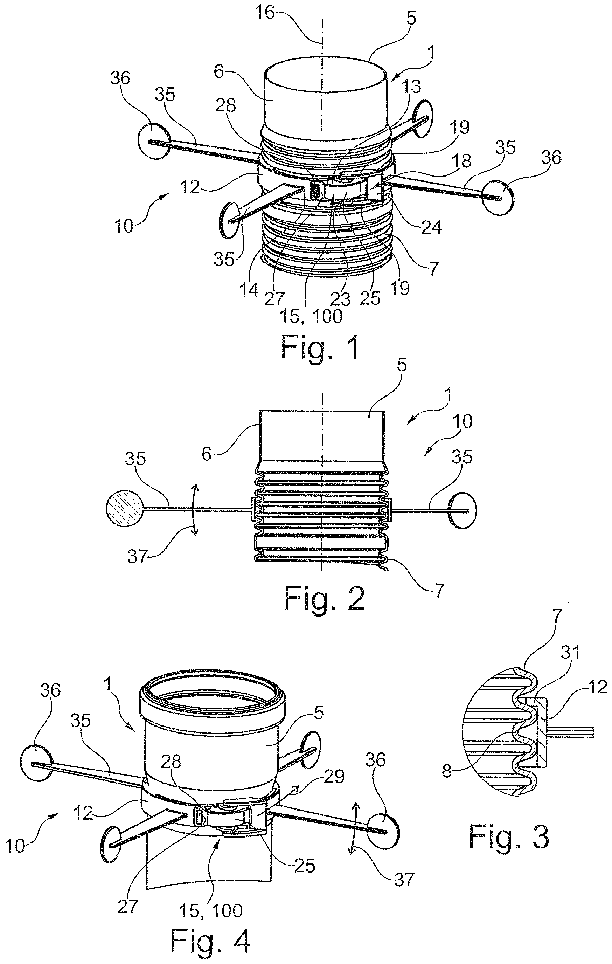

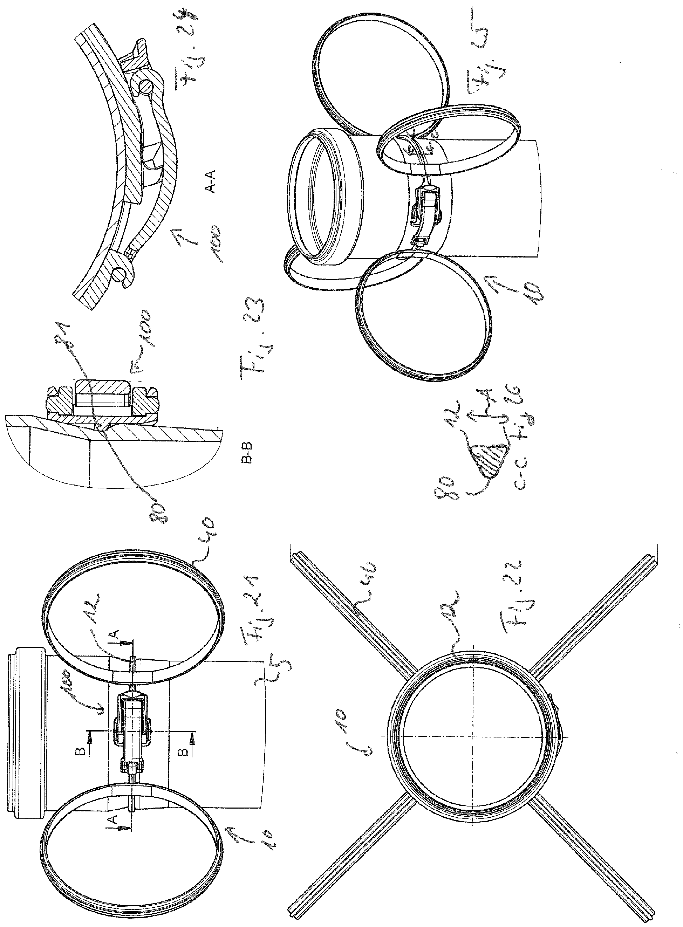

In den Fig. 1 bis 20 sind Ausführungen einer Vorrichtung gezeigt, die nicht von der erfindungsgemäßen Lehre, sprich der erfindungsgemäßen Ausgestaltung der Anlagefläche Gebrauch machen. Diese Figuren und die zugehörige Figurenbeschreibung dienen im Wesentlichen der Erläuterung. Jedoch können auch die in den Fig. 1 bis 20 dargestellten Vorrichtungen mit einer erfindungsgemäßen Anlagefläche ausgestattet werden und sollen insofern dann bezüglich der Anbauten und speziellen Ausbildung der Spanneinrichtung als vorteilhafte Weiterbildungen der Erfindung als offenbart gelten. In den Fig. 21 bis 26 sind dann teilweise in Detaildarstellungen Vorrichtungen nach dem Konzept der Erfindung dargestellt, die sich auszeichnen durch eine schmale, bevorzugt linienförmige Anlagefläche. Die in den Fig. 21 bis 26 gezeigten und im Rahmen der weiteren Figurenbeschreibung auch beschriebenen Vorrichtungen sollen weiterbildungsgemäß auch mit Merkmalen der in den Fig. 1 bis 20 gezeigten Vorrichtungen als offenbart gelten.

In den Fig. 1 bis 3 ist eine Vorrichtung 10 zum zeitweiligen Befestigen einer Rohreinheit 1 dargestellt. Die Rohreinheit 1 besteht dabei in der Praxis aus wenigstens zwei miteinander koaxial in Längsrichtung miteinander verbundenen Rohrelementen 5, von denen in der Fig. 1 lediglich ein einziges Rohrelement 5 dargestellt ist. Die Verbindung der Rohrelemente 5 erfolgt auf an sich bekannte und nicht erfindungswesentliche Art und Weise und ist daher nicht dargestellt. Das Rohrelement 5 weist einen ersten Wandabschnitt 6 auf, dessen Außenwand eben bzw. glatt ausgebildet ist, während ein sich an den ersten Wandabschnitt 6 anschließender zweiter Wandabschnitt 7 eine gewellte Wand aufweist, so dass das Rohrelement 5 im Bereich des zweiten Wandabschnitts 7 verformbar ist, um sich beispielsweise dem Verlauf eines Schachtes anpassen zu können, ohne dass dazu zusätzliche Verbindungselemente zwischen den einzelnen Rohrelementen 5 erforderlich sind. Wie insbesondere anhand der Fig. 3 erkennbar ist, bildet ein derartiger zweiter, in Form eines Wellrohrs ausgebildeter Wandabschnitt 7 nach innen ragende Wandbereiche 8 aus.

Die Vorrichtung 10 umfasst ein manschettenartiges Element 12 mit einem im Wesentlichen rechteckförmigen Querschnitt. Das Element 12, das insbesondere als Spritzgussteil hergestellt ist und aus Kunststoff besteht, weist eine runde Grundform auf bzw. eine Grundform, deren Innenweite und -form der Form bzw. dem Durchmesser des Rohrelements 5 angepasst ist. Die radial umlaufende Wand des Elements 12 ist an einer Stelle längsgeschlitzt ausgebildet, so dass zwei gegenüberliegende Endbereiche 13, 14 am Element 12 ausgebildet werden. Die beiden Endbereiche 13, 14 dienen der Ausbildung bzw. Anordnung einer als Klemmschnallenverbindung 15 ausgebildeten Spanneinrichtung 100, die ebenfalls (vollständig) aus Kunststoff ausgebildet ist, und vorzugsweise aus demselben Kunststoff wie das manschettenartige Element 12 besteht.

Die Klemmschnallenverbindung 15 weist einen an dem ersten Endbereich 13 befestigten, in einer parallel zur Längsachse 16 der Vorrichtung 10 bzw. senkrecht zur Haupterstreckungsrichtung des Elements 12 verlaufenden Drehachse schwenkbaren Bügel 18 auf, der zwei parallel zueinander angeordnete Rippen 19 umfasst, an deren jeweils einem Ende ein Zapfen 21 angeformt ist, der in jeweils eine Ausnehmung in Form eines Durchbruchs 22 eingreift. Der Durchbruch 22 ist an einem flanschartig umgebogenen Bereich 23 ausgebildet, der an den beiden Stirnseiten des manschettenartigen Elements 12 einstückig angeformt ist, wie dies insbesondere anhand der Fig. 11 erkennbar ist. Die beiden Rippen 19 sind auf der dem Zapfen 21 gegenüberliegenden Seite mit einer Griffplatte 24 miteinander verbunden, die in der in der Fig. 1 dargestellten Verriegelungsstellung der Vorrichtung 10 schräg zum Umfang des manschettenartigen Elements 12 angeordnet ist, derart, dass die Griffplatte 24 in der Verriegelungsstellung der Klemmschnallenverbindung 15 von dem manschettenartigen Element 12 absteht, so dass diese von beiden Seiten von einem Bediener bzw. Monteur gegriffen werden kann.

Die als Hebel wirkende Griffplatte 24 ist mit einem Halteabschnitt 25 vorzugsweise einstückig verbunden, der streifenförmig ausgebildet ist, und der auf der der Griffplatte 24 gegenüberliegenden Seite eine im Ausführungsbeispiel in etwa rechteckförmige Ausnehmung in Form eines Durchbruchs 27 aufweist. Der Durchbruch 27 wirkt zum Herstellen der Verriegelungsstellung der Klemmschnallenverbindung 15 mit einem hakenförmigen Fortsatz 28 zusammen, der an dem dem ersten Endbereich 13 gegenüberliegenden zweiten Endbereich 14 des Elements 12 angeordnet ist, vorzugsweise durch eine einstückig an dem zweiten Endbereich 14 ausgebildete Anformung.

Durch die geometrische Dimensionierung der Griffplatte 24 sowie dem Ort der Befestigung des Halteabschnitts 25 an der Griffplatte 24 wird ein Hebelmechanismus ausgebildet, der eine Betätigungskraft des Bedieners an der Griffplatte in eine erhöhte Spannkraft an der Vorrichtung 10 übersetzt.

Vorzugsweise ist der Querschnitt des manschettenartigen Elements 12 bzw. der Abstand zwischen den beiden Endbereichen 13, 14 derart ausgebildet, dass zum Umschließen der Rohreinheit 1 bzw. des Rohrelements 5 das manschettenartige Element 12 derart aufgeweitet werden kann, dass das Rohrelement 5 zwischen den beiden Endbereichen 13, 14 des Elements 12 eingeführt werden kann. Zum Ausbilden der in den Fig. 1 bis 3 dargestellten Verriegelungsstellung der Vorrichtung 10 ist es lediglich erforderlich, den Durchbruch 27 des Halteabschnitts 25 der Klemmschnallenverbindung 15 mit dem Fortsatz 28 in Wirkverbindung zu bringen, und anschließend die Griffplatte 24 in Richtung des Pfeils 29 zu verschwenken. Die Ausbildung der Klemmschnallenverbindung 15 bzw. des Bügels 18 ist dabei derart, dass in der Verriegelungsstellung der Vorrichtung 10 eine Selbstsicherung des Bügels 18 stattfindet, d.h., dass zum Lösen der Klemmschnallenverbindung 15 eine Lösekraft entgegen der Richtung des Pfeils 29 aufgebracht werden muss.

Die axiale Sicherung bzw. Fixierung des Rohrelements 5 innerhalb des manschettenartigen Elements 12 erfolgt mittels an den beiden Stirnseiten des Elements 12 radial nach innen ragender Halteabschnitte 31, 32. Wie besonders deutlich anhand der Fig. 7 erkennbar ist, sind dabei bevorzugt jeweils mehrere Halteanschnitte 31, 32, im Ausführungsbeispiel jeweils vier Halteabschnitte 31, 32 vorgesehen, die in gleichmäßigen Winkelabständen zueinander angeordnet sind. Die flanschartig nach innen ragenden Halteabschnitte 31, 32 sind dabei segmentartig ausgebildet, so dass zwischen den einzelnen Halteabschnitten 31, 32 jeweils ein Freiraum ausgebildet ist.

Wie man ferner anhand der Fig. 7 erkennt, sind die einen Halteabschnitte 31 radial winkelversetzt zu den anderen Haltebereichen 32 angeordnet, derart, dass in Längsrichtung der Vorrichtung 10 Freiräume 38 ausgebildet werden, die über die gesamte Höhe des manschettenartigen Elements 12 verlaufen, wie dies anhand der Fig. 8 erkennbar ist. Die axiale Fixierung des Rohrelements 5 mittels der Halteabschnitte 31, 32 erfolgt entsprechend den Fig. 2 und 3 dadurch, dass die Halteabschnitte 31 bzw. 32 in die radial nach innen stehenden Wandbereiche 8 des Rohrelements 5 eingreifen und dadurch einen Formschluss zwischen dem gewellt ausgebildeten zweiten Wandabschnitt 7 des Rohrelements 5 und den Halteabschnitten 31, 32 ausbilden.

Um die Vorrichtung 10 bzw. die Rohreinheit 1 innerhalb beispielsweise eines Schachtes zentrieren bzw. beabstandet zu den Wänden des Schachtes anordnen zu können, weist die Vorrichtung 10 darüber hinaus beispielhaft vier, in gleichmäßigen Winkelabständen zueinander angeordnete, radial abragende Organe in Form von Haltearmen 35 auf. Die Haltearme 35 sind einstückig an dem manschettenartigen Element 12 an dessen Außenumfang angeformt und weisen beispielhaft einen rechteckigen Querschnitt auf, der sich radial nach außen verringert. An dem dem manschettenartigen Element 12 abgewandten Ende trägt jeder der Haltearme 35 eine Klemmscheibe 36. Durch die Anordnung bzw. Ausbildung der Haltearme 35 sind diese in Richtung des Doppelpfeils 37 schwenkbar an dem manschettenartigen Element 12 angeordnet, sodass sich beim Einführen bzw. Einschieben der Vorrichtung 10 in einen Öffnungsquerschnitt beispielsweise eines Schachtes die Haltearme 35 der Querschnittsform des Schachtes anpassen können bzw. sich der radiale Abstand der Klemmscheiben 36 zum Element 12 verändert.

Die Fig. 4 bis 6 zeigen die Vorrichtung 10 im Zusammenhang mit einer Rohreinheit 1, die aus Rohrelementen 5a besteht. Das Rohrelement 5a unterscheidet sich von dem Rohrelement 5 dadurch, dass es keinen im Querschnitt gewellt ausgebildeten zweiten Wandabschnitt 7 aufweist. Stattdessen ist ein zweiter Wandabschnitt 7a vorgesehen, der eine Einschnürung 9 in Form einer Sicke o.ä. ausbildet, in die zur axialen Festsetzung des Rohrelements 5a mittels der Vorrichtung 10 die Halteabschnitte 31, 32 eingreifen, wie dies insbesondere anhand der Fig. 5 und 6 erkennbar ist.

In den Fig. 7 bis 11 ist eine modifizierte Vorrichtung 10a dargestellt, die sich von der Vorrichtung 10 gemäß den Fig. 1 bis 6 dadurch unterscheidet, dass anstelle von Haltearmen 35 Halteringe 40 vorgesehen sind. Die Halteringe 40 bestehen bevorzugt ebenfalls aus Kunststoff und sind als von dem manschettenartigen Element 12 separate Bauteile ausgebildet und mit diesem beispielsweise über eine nicht näher dargestellte formschlüssige Rastverbindung verbunden, indem beispielsweise ein an einem Haltering 40 angeformter Zapfen formschlüssig in eine entsprechende Öffnung in dem manschettenartigen Element 12 eingreift und dabei den Haltering 40 in einer definierten Position arretiert. Insbesondere ist es vorgesehen, wie insbesondere anhand einer Zusammenschau der Fig. 7 und 8 erkennbar ist, dass die Längsachsen 41 der Halteringe 40 um 90° zur Längsachse 42 des manschettenartigen Elements 12 verlaufen. Weiterhin ist insbesondere anhand der Fig. 9 erkennbar, dass die Halteringe 40 einen im Wesentlichen rechteckigen Querschnitt aufweisen, von dem an der Außenseite ein umlaufender Steg 43 hervorsteht. Durch die um 90° gegenüber dem manschettenartigen Element 12 verschwenkte Anordnung der Halteringe 40 sind diese in ihrem Querschnitt elastisch verformbar ausgebildet, so dass sich diese, in Analogie zu den Haltearmen 35, nahezu beliebigen Querschnitten (eines Schachtes) anpassen, in denen die Vorrichtung 10 mitsamt der Rohreinheit 1 angeordnet ist.

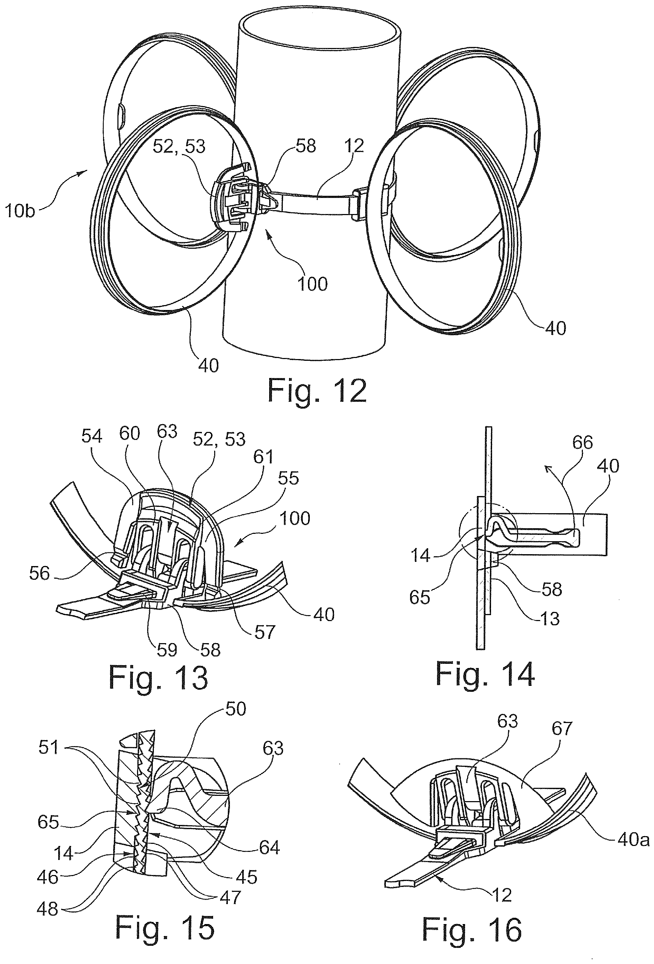

In den Fig. 12 bis 15 ist eine weitere, modifizierte Vorrichtung 10b dargestellt, die sich von den Vorrichtungen 10a, 10b durch eine andersartig ausgestaltete Spanneinrichtung 100 auszeichnet. Hierzu weist die Spanneinrichtung 100 an dem einen Endbereich 13 des manschettenartigen Elements 12, wie insbesondere in den Fig. 14 und 15 erkennbar ist, auf gegenüberliegenden Seiten eine erste bzw. zweite Verzahnungsgeometrie 45, 46 auf. Die beiden Verzahnungsgeometrien 45, 46 weisen im Querschnitt keilförmig ausgebildete Zähne 47, 48 auf. Der Endbereich 13 kann über den anderen Endbereich 14 des manschettenartigen Elements 12 übergeschoben werden, wobei der andere Endbereich 14 eine Gegenverzahnung 50 mit Zähnen 51 aufweist, die mit der zweiten Verzahnungsgeometrie 46 zusammenwirkt. Die erste Verzahnungsgeometrie 45 wirkt mit einer als Hebel wirkenden Betätigungsplatte 52 zusammen, die als Betätigungselement 53 ausgebildet ist. Die Betätigungsplatte 52 ist im Bereich eines Halterings 40 angeordnet, wobei zwei seitlich an der Betätigungsplatte 52 angeordnete, abragende Haltearme 54, 55 über Scharnierbereiche 56, 57 einstückig mit dem Haltering 40 verbunden sind. Die Schwenkachse der Betätigungsplatte 52 verläuft somit senkrecht zur Haupterstreckungsrichtung des Elements 12. Der ortsfest am Element 12 angeordnete Haltering 40 weist einen Mittelbereich 58 mit einer Durchgangsöffnung 59 auf, durch die der erste Endbereich 13 des manschettenartigen Elements 12 hindurchgeschoben werden kann. Zusätzlich dient der Mittelbereich 58 der zusätzlichen, schwenkbaren Befestigung der Betätigungsplatte 52 mittels zweier U-förmiger Arme 60, 61. Die anderen Halteringe 40 können zur besseren Anpassbarkeit der Vorrichtung 10b entlang des Umfangs des Elements 12 verschiebbar angeordnet sein.

Zwischen den beiden Armen 60, 61 ist ein zungenartiger Abschnitt 63 der Betätigungsplatte 52 angeordnet, dessen der ersten Verzahnungsgeometrie 45 zugewandtes Ende hakenförmig gekrümmt ausgebildet ist und mit einer Spitze 64 mit der ersten Verzahnungsgeometrie 45 zusammenwirkt. Wesentlich dabei ist, dass die erste Verzahnungsgeometrie 45 zusammen mit der Spitze 64 in Art einer Ratschenverbindung zusammenwirkt.

Die soweit beschriebene Vorrichtung 10b arbeitet wie folgt: Nachdem der erste Endbereich 13 durch die Durchgangsöffnung 59 des Mittelbereichs 58 hindurchgeschoben wurde, wirkt die zweite Verzahnungsgeometrie 46 mit der Gegenverzahnung 50 in Form einer Rastverbindung 65 zusammen. Gleichzeitig ist die Spitze 64 des zungenartigen Abschnitts 63 in Wirkverbindung mit der ersten Verzahnungsgeometrie 45 angeordnet. Wird nun die Betätigungsplatte 52 in Richtung des Pfeils 66 geschwenkt, so nimmt der zungenartige Abschnitt 63 bzw. die Spitze 64 den ersten Endbereich 13 unter Verstärkung der Betätigungskraft des Bedieners mit und schiebt dabei die zweite Verzahnungsgeometrie 64 derart über die Gegenverzahnung 50, dass sich der Umfang des manschettenartigen Elements 12 verringert, d.h. das Element 12 gespannt wird. Wird nun die Betätigungsplatte 52 entgegen der Richtung des Pfeils 66 zurückgeschwenkt, so gleitet die Spitze 64 des zungenartigen Abschnitts 63 aufgrund der ratschenartigen Ausbildung über die Zähne 48 der ersten Verzahnungsgeometrie 45 hinweg, ohne dabei den Endbereich 13 mitzunehmen. Vielmehr ändert sich die Position der beiden Endabschnitte 13, 14 aufgrund der Geometrie der zweiten Verzahnungsgeometrie 46 sowie der Gegenverzahnung 50 nicht.

Ergänzend wird erwähnt, dass anstelle einer separaten Betätigungsplatte 52 als Betätigungselement 53 auch der Haltering 40 selbst als Betätigungselement 53 dienen kann. Im einfachsten Fall kann dies dadurch geschehen, dass entsprechend der Fig. 16 ein den Abschnitt 63 tragender Verbindungsabschnitt 67 starr am Haltering 40a angeordnet ist, so dass bei einem Schwenken des Halterings 40a der Verbindungsabschnitt 67 und somit auch der Abschnitt 63 der Schwenkbewegung folgt.

Die Vorrichtung, wie sie in Fig. 12 gezeigt ist, umfasst eine im Zusammenhang mit Fig. 26 erläuterte Anlagefläche 80, mit der sich die Vorrichtung an einem glatten Rohrabschnitt, d. h. Zylindermantelabschnitt abstützt. Dieses Detail ist in den Fig. 13 bis 16 aus Übersichtlichkeitsgründen nicht dargestellt. Das Element 12 verjüngt sich in radialer Richtung nach innen hin zu einer linienförmigen Anlagefläche.

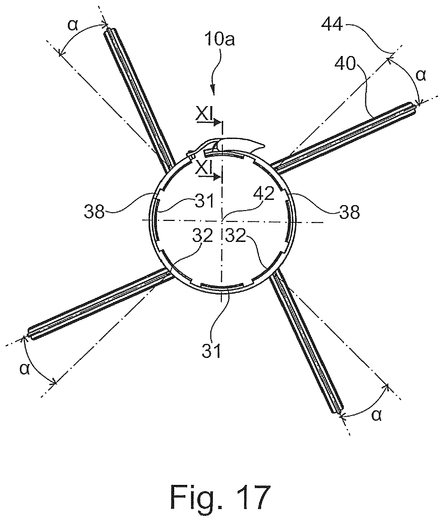

In der Fig. 17 ist eine modifizierte Vorrichtung 10 dargestellt, bei der die Klemmringe 40b um einen Winkel α in Bezug zu einer an Befestigungsort der Klemmringe 40b an dem manschettenartigen Element 12 angeordneten, die Längsachse 42 schneidenden Geraden 44 geschwenkt sind. Wesentlich dabei ist, dass die Klemmringe 40b, zusammen mit dem Element 12 als einteiliges Bauteil als Spritzgußteil ausgebildet sind. Darüber hinaus hat es sich als vorteilhaft erwiesen, wenn Winkel α zwischen 5° und 45°, bevorzugt zwischen 10° und 30°, ganz besonders bevorzugt zwischen 15° und 20°beträgt.

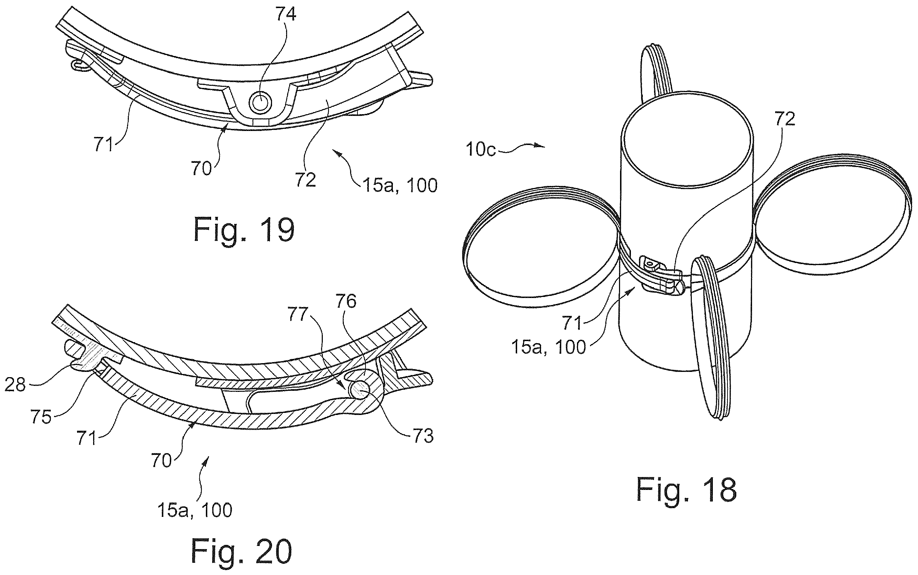

In den Fig. 18 bis 20 ist eine gegenüber der in der Fig. 1 dargestellten Vorrichtung 10 modifizierte Vorrichtung 10c dargestellt, die sich durch die Verwendung einer Spanneinrichtung 100 mit einer Klemmschnallenverbindung 15a auszeichnet, die als Doppelgelenkschnalle 70 ausgebildet ist. Die Doppelgelenkschnalle 70 umfasst einen vorzugsweise aus Kunststoff bestehenden Haltebügel 71, der mit einem Spannbügel 72 im Bereich einer Achse 73 des Spannbügels 72 gelenkig verbunden ist. Der Spannbügel 72 ist wiederum auf der der Achse 73 abgewandten Seite in einer zur Achse 73 parallelen Achse 74 gelenkig angeordnet. Die Achse 74 ist am einen Endbereich des manschettenartigen Elements 12 angeordnet. Der Haltebügel 71 weist einen Durchbruch 75 auf, der zum Spannen der Klemmschnallenverbindung 15a in den Fortsatz 28 eingreift. Durch eine Variation der Länge des Spannbügels 72 lässt sich die Öffnungsweite der Spanneinrichtung 100 zum Ein- bzw. Durchführen des Rohrelements 5 bzw. die erforderliche Betätigungskraft zum Schließen der Spanneinrichtung 100 beeinflussen. Der Haltebügel 71 weist einen die Achse 73 umgreifenden Halteabschnitt 76 auf, dessen Öffnung 77 eine Öffnungsweite bzw. einen Öffnungsspalt aufweist, die bzw. der geringer ist als der Durchmesser der Achse 73. Dadurch bildet der Haltebügel 71 bzw. der Halteabschnitt 76 mit der Achse 73 eine Rastverbindung aus, bei der der Halteabschnitt 76 die Achse 73 umgreift.

Die Vorrichtung gemäß den Fig. 18 bis 20 umfasst eine linienförmige Anlagefläche, wie diese im Detail in Fig. 26 gezeigt ist und im Zusammenhang mit Fig. 26 erläutert werden wird. Lediglich aus Übersichtlichkeitsgründen ist die sich verjüngende Ausgestaltung des Elementes in den Fig. 19 und 20 nicht gezeigt. Die linienförmige Anlagefläche stützt sich an einem glatten Rohrabschnitt ab, d. h. greift nicht in eine äußere Vertiefung ein.

Im Folgenden werden die nach dem Konzept der Erfindung ausgebildeten Vorrichtungen der Fig. 1 bis 26 näher erläutert, wobei im Wesentlichen auf die Unterschiede zu den vorstehend erläuterten Vorrichtungen eingegangen wird, um Wiederholungen weitgehend zu vermeiden. Im Hinblick auf die Gemeinsamkeiten zu den vorstehenden Vorrichtungen wird auf die entsprechenden Figuren mit zugehörigen Textstellen verwiesen.

Die in den Fig. 21 bis 26 gezeigte Vorrichtung 10, welche an einem Rohrelement 5 festgelegt ist, umfasst ein manschettenartiges Element 12, welches eine Durchgangsöffnung zur Aufnahme des Rohrelementes 5 begrenzt. An diesem Rohrelement 5 liegt das manschettenartige Element 12 an und zwar am Außenumfang des Rohrelementes 5 mittels einer in einer Querschnittsansicht in Fig. 26 gezeigten, zumindest näherungsweise linienförmigen Anlagefläche 80. An dem manschettenartigen Element 12 sind wie bei den vorangehenden Ausführungsformen Halteringe 40 zum Abstützen in einem Schacht vorgesehen, die alternativ einteilig mit dem manschettenartigen Element 12 ausgebildet oder, vorzugsweise lösbar an diesem festgelegt sein können. Die Vorrichtung 10, genauer das manschettenartige Element 12 ist mit einer Spanneinrichtung 100 versehen, die im Detail nochmals in den teilgeschnittenen Ansichten gemäß den Fig. 24 und 25 gezeigt ist und die bereits von ihrem grundsätzlichen Aufbau her im Zusammenhang mit den vorstehenden Vorrichtungen beschrieben wurde.

Interessant ist, dass auch im Bereich der Spanneinrichtung 100, wie sich aus Fig. 23 ergibt, eine zumindest näherungsweise linienförmige Anlagefläche 80 realisiert ist. Hierzu ist die Spanneinrichtung 100 im Bereich ihrer axialen Mitte mit einem Verjüngungsabschnitt 81 versehen, welcher eine im Wesentlichen dreieckförmige Querschnittskontur aufweist.
In einem Bereich in Umfangsrichtung außerhalb der Spanneinrichtung 100 weist das manschettenartige Element 12 einen in Fig. 26 gezeigten Querschnitt auf, der in einer bevorzugten Ausführungsform näherungsweise dreieckförmig mit gerundeten Ecken ausgebildet ist. Mit anderen Worten verjüngt sich die Querschnittsfläche des manschettenartigen Elementes 12 in radialer Richtung nach innen hin zu der Anlagefläche 80.

Wie sich aus Fig. 26 ergibt, befindet sich die Anlagefläche 80 auf etwa der Hälfte der Axialerstreckung A (senkrechte Erstreckung) des manschettenartigen Elementes 12. Zu erkennen ist, dass die Axialerstreckung A der Anlagefläche 80, d.h. die Erstreckung der Anlagefläche 80 senkrecht zu der Umfangserstreckung des manschettenartigen Elements deutlich geringer ist als die maximale Axialerstreckung des manschettenartigen Elementes 12.
Anstelle in einer äußeren Vertiefung angeordnet zu werden, wie dies in Fig. 23 gezeigt ist, kann sich die Anlagefläche 80, was bevorzugt ist, auch an einem Zylinderabschnitt abstützen, d. h. an einem glatten Abschnitt und nicht in einer Vertiefung, was bevorzugt ist.

### Bezugszeichenliste

- 1: Rohreinheit
- 5/a: Rohrelement
- 6: erster Wandabschnitt
- 7/a: zweiter Wandabschnitt
- 8: Wandbereich
- 9: Einschnürung
- 10/a/b/c: Vorrichtung
- 12: manschettenartiges Element
- 13: Endbereich
- 14: Endbereich
- 15/a: Klemmschnallenverbindung
- 16: Längsachse
- 18: Bügel
- 19: Rippe
- 21: Zapfen
- 22: Durchbruch
- 23: umgebogener Bereich
- 24: Griffplatte
- 25: Halteabschnitt
- 27: Durchbruch
- 28: Fortsatz
- 29: Pfeil
- 31: Halteabschnitt
- 32: Halteabschnitt
- 35: Haltearm
- 36: Klemmscheibe
- 37: Doppelpfeil
- 38: Freiraum
- 40/a/b: Haltering
- 41: Längsachse
- 42: Längsachse
- 43: Steg
- 44: Gerade
- 45: Verzahnungsgeometrie
- 46: Verzahnungsgeometrie
- 47: Zahn
- 48: Zahn
- 50: Gegenverzahnung
- 51: Zahn
- 52: Betätigungsplatte
- 53: Betätigungselement
- 54: Haltearm
- 55: Haltearm
- 56: Scharnierbereich
- 57: Scharnierbereich
- 58: Mittelbereich
- 59: Durchgangsöffnung
- 60: Arm
- 61: Arm
- 63: zungenartiger Abschnitt
- 64: Spitze
- 65: Rastverbindung
- 66: Pfeil
- 67: Verbindungsabschnitt
- 70: Doppelgelenkschnalle
- 71: Haltebügel
- 72: Spannbügel
- 73: Achse
- 74: Achse
- 75: Durchbruch
- 76: Halteabschnitt
- 77: Öffnung
- 80: Anlagefläche
- 81: Verjüngungsabschnitt

- 100: Spanneinrichtung

- α: Winkel
- A: Axialerstreckung

## Patentansprüche

1. Vorrichtung (10; 10a; 10b; 10c) zum Befestigen, insbesondere Zentrieren, einer Rohreinheit (1), insbesondere einer aus wenigstens zwei miteinander koaxial verbundenen Rohrelementen (5; 5a) bestehenden Rohreinheit (1) in einem Schacht, wobei die Vorrichtung ein manschettenartiges Element (12) zum Umschließen der Rohreinheit (1) umfasst und dieses mehrere, insbesondere drei oder vier, bevorzugt in gleichen Winkelabständen zueinander angeordnete von diesem radial abragende Organe (35; 40; 40a; 40b) trägt, die in Längsrichtung der Vorrichtung betrachtet radial elastisch verformbar sind und wobei das manschettenartige Element (12) umfangsseitig zwei in einer Verriegelungsstellung in Wirkverbindung miteinander verbundene Endbereiche (13, 14) aufweist, und wobei das Element (12) eine sich in Umfangsrichtung sowie senkrecht dazu erstreckende Anlagefläche (80) zum Anliegen am Außenumfang der Rohreinheit (1) umfasst, wobei
die senkrechte Erstreckung der Anlagefläche (80) geringer ist als die maximale Erstreckung des Elementes (12) in diese Richtung in einem radial benachbarten Bereich,
**dadurch gekennzeichnet,**
**dass** sich das Element (12) in radialer Richtung nach Innen hin zur Anlagefläche (80) verjüngt, welche sich in der axialen Mitte des manschettenartigen Elementes (12) befindet, und
**dass** das Element (12) in einer Querschnittsansicht zumindest näherungsweise dreieckförmig konturiert ist, und dass
die beiden Endbereiche (13, 14) mit einer eine manuelle Betätigungskraft kraftverstärkenden Spanneinrichtung (100) verbunden sind, wobei die Spanneinrichtung (100) ein werkzeuglos und manuell betätigbares, hebelförmiges Betätigungselement (24; 53; 72) zum Spannen der Spanneinrichtung (100) aufweist.

2. Vorrichtung nach Anspruch 1,
**dadurch gekennzeichnet,**
**dass** die Anlagefläche (80) zumindest näherungsweise linienförmig ist.

3. Vorrichtung ach einem der Ansprüche 1 oder 2,
**dadurch gekennzeichnet,**
**dass** das Element (12) gerundete Ecken aufweist.

4. Vorrichtung nach einem der vorhergehenden Ansprüche,
**dadurch gekennzeichnet,**
**dass** die Spanneinrichtung (100) als Klemmschnallenverbindung (15; 15a) ausgebildet ist.

5. Vorrichtung nach Anspruch 4,
**dadurch gekennzeichnet,**
**dass** die Klemmschnallenverbindung (15) einen an einem ersten Endbereich (13) des manschettenartigen Elements (12) schwenkbar befestigten Bügel (18) aufweist, an dem ein Halteabschnitt (25) einstückig angeformt ist, das auf der dem zweiten Endbereich (14) des manschettenartigen Elements (12) zugewandten Seite eine Ausnehmung (27) aufweist, die mit einem am zweiten Endbereich (14) einstückig angeformten Fortsatz (28) zusammenwirkt.

6. Vorrichtung nach Anspruch 5,
**dadurch gekennzeichnet,**
**dass** der Bügel (18) zwei zapfenartige Achsen (21) aufweist, die in im manschettenartigen Element (12) ausgebildete Aufnahmeöffnungen (22) eingreifen.

7. Vorrichtung nach Anspruch 5 oder 6,
**dadurch gekennzeichnet,**
**dass** das Betätigungselement in Form einer Griffplatte (24) am Bügel (18) ausgebildet ist, die in der Verriegelungsstellung der Klemmschnallenverbindung (15) vom manschettenartigen Element (12) schräg absteht und dadurch von beiden Seiten greifbar ist.

8. Vorrichtung nach einem der vorhergehenden Ansprüche,
**dadurch gekennzeichnet,**
**dass** die Klemmschnallenverbindung (15a) eine Doppelgelenkschnalle (70) mit einem Haltebügel (71) und einem als Betätigungselement (72) dienenden Spannbügel umfasst, die in einer Achse (73) gelenkig miteinander verbunden sind.

9. Vorrichtung nach Anspruch 8,
**dadurch gekennzeichnet,**
**dass** der Haltebügel (71) und der Spannbügel über eine Rastverbindung miteinander verbunden sind, wobei der Haltebügel (71) einen Halteabschnitt (76) aufweist, der die Achse (73) umgreift, und wobei der Halteabschnitt (76) eine Öffnung (77) zum Einführen der Achse (73) aufweist, deren Öffnungsweite größer ist als der Durchmesser der Achse (73).

10. Vorrichtung nach einem der vorhergehenden Ansprüche,
**dadurch gekennzeichnet,**
**dass** die Spanneinrichtung (100) zum Ausbilden einer Rastverbindung (65) zwischen den Endbereichen (13, 14) des manschettenartigen Elements (12) dient, wobei das Betätigungselement (53) in Wirkverbindung mit einer an einem Endbereich (13) des manschettenartigen Elements (12) ausgebildeten ersten Verzahnungsgeometrie (45) zusammenwirkt.

11. Vorrichtung nach Anspruch 10,
**dadurch gekennzeichnet,**
**dass** das Betätigungselement (53) einen mit der ersten Verzahnungsgeometrie (45) zusammenwirkenden Abschnitt (63) aufweist, der mit der ersten Verzahnungsgeometrie (45) in Art einer Ratsche zusammenwirkt, sodass bei einer Bewegung des Betätigungselements (53) in die eine Richtung sich der Umfang des manschettenartigen Elements (12) verringert und bei einer Bewegung des Betätigungselements (53) in die andere Richtung das manschettenartige Element (53) seinen Umfang beibehält.

12. System, umfassend eine Rohreinheit sowie eine Vorrichtung nach einem der vorhergehenden Ansprüche, wobei das manschettenartige Element (12) der Vorrichtung die Rohreinheit umschließt und dabei mit ihrer Anlagefläche (80) am Außenumfang der Rohreinheit anliegt,
wobei die Anlagefläche an einem als Glattrohrabschnitt ausgebildeten Zylindermantelflächenabschnitt der Rohreinheit angeordnet ist.

13. System nach Anspruch 12,
**dadurch gekennzeichnet,**
**dass** die Vorrichtung in axialer Richtung verkantet ist.

## Claims

1. Device (10; 10a; 10b; 10c) for fastening a, in particular centering, a tube assembly (1), in particular a tube assembly (1) consisting of at least two coaxially connected tube elements (5; 5a) in a shaft, wherein the device comprises a collar-like element (12) for enclosing the tube assembly (1) und this element carries multiple, in particular three or four, radially protruding bodies (35; 40; 40a; 40b), which are preferably arranged at like angular distances to one another, the bodies being radially elastically deformable viewed in the longitudinal direction of the device, and wherein the collar-type element (12) comprises two circumferential end portions (13, 14) operatively connected to one another in a locking position, and wherein the element (12) includes a contact surface (80), which extends in the circumferential direction as well as perpendicularly thereto, for resting against the tube assembly (1) at
the outer circumference thereof, wherein
the perpendicular extension of the contact surface (80) is less than the maximum extension of the element (12) in this direction in a radially neighboring region,
**characterized in that**
the element (12) tapers inward in the radial direction toward the contact surface (80), which is located in the axial center of the collar-like element (12), and
**in that** the element (12) is contoured at least approximately triangularly in a cross-sectional view, and **in that**
the two end portions (13, 14) are connected a clamping device (100) which increases a manual actuation force, wherein the clamping device (100) comprises a lever-type actuation element (24; 53; 72), which can be actuated manually and without tools, for clamping the clamping device (100).

2. Device according to claim 1,
**characterized in that**
the contact surface (80) is at least approximately line-shaped.

3. Device according to one of claims 1 or 2,
**characterized in that**
the element (12) has rounded corners.

4. Device according to one of the preceding claims,
**characterized in that**
the clamping device (100) is formed as a clamping buckle connection (15; 15a).

5. Device according to claim 4,
**characterized in that**
the clamping buckle connection (15) has a bracket (18) pivotally attached to a first end region (13) of the collar-type element (12), on which bracket a holding section (25) is formed integrally, which comprises a recess (27) on the side facing the second end region (14) of the collar-like element (12), which recess corporates with a protrusion (28) formed integrally on the second end portion (14).

6. Device according to claim 5.
**characterized in that**
the bracket 818) comprises two stud-like axes (21), which engage in reception openings (22) formed in the collar-like element (12).

7. Device according to claim 5 or 6,
**characterized in that**
the actuation element is formed in the form of a handle plate (24) at the bracket (18), which protrudes obliquely from the collar-like element (12) in the locking position of the clamping buckle connection (15) and can thereby be gripped from both sides.

8. Device according to one of the preceding claims,
**characterized in that**
the clamping buckle connection (15a) comprises a double joint buckle (70) having a holding bracket (71) und and clamping bracket serving as actuation element (72), which are connected to one another in one axis (73) in a articulated manner.

9. Device according to claim 8,
**characterized in that**
the holding bracket (71) and the clamping bracket are connection to one another via a latch connection, wherein the holding bracket (71) comprises a holding section (76) which engages around the axis (73), and wherein the holding section (76) comprises an opening (77) for introducing the axis (73), the opening width of which is greater than the diameter of the axis (73).

10. Device according to one of the preceding claims,
**characterized in that**
the clamping device (100) serves for establishing a latch connection (65) between the end portions (13, 14) of the collar-like element (12), wherein the actuation element (53) corporates with a first indentation geometry (45) formed at an end portion (13) of the collar-like element (12).

11. Device according to claim 10,
**characterized in that**
the actuation element (53) comprises a section (63) which corporates with the first indentation geometry (45), which section corporates with the first indentation geometry (45) in the type of a ratch, so that the perimeter of the collar-like element (12) decreases upon a movement of the actuation element (53) in one direction, and the perimeter of the collar-like element (53) remains constant upon a movement of the actuation element (53) in the other direction of the collar-like element (53).

12. System, comprising a tube assembly as well as a device according to one of
the preceding claims, wherein the collar-like element (12) of the device encloses the tube assembly and rests at the outer circumference of the tube assembly with its contact surface (80),
wherein the contact surface is arranged at a cylinder shell portion of the tube assembly which is formed as a bare tube portion.

13. System according to claim 12,
**characterized in that**
the device is tilted in the axial direction.

## Revendications

1. Dispositif (10 ; 10a ; 10b ; 10c) pour fixer, en particulier centreur, une unité de tuyau (1), en particulier une unité de tuyau (1) constituée d'au moins deux éléments de tuyau (5 ; 5a) connectés coaxialement l'un à l'autre, dans une gaine, le dispositif comprenant un élément de type manchon (12) destiné à entourer l'unité de tuyau (1), et celui-ci portant plusieurs, en particulier trois ou quatre organes (35 ; 40 ; 40a ; 40b) disposés à intervalles angulaires de préférence identiques et faisant saillie radialement depuis celui-ci, lesquels peuvent être déformés radialement élastiquement, considéré dans la direction longitudinale du dispositif, et l'élément de type manchon (12) présentant, du côté de la périphérie, deux régions d'extrémité (13, 14) connectées l'une à l'autre en liaison fonctionnelle dans une position de verrouillage, et l'élément (12) comprenant une surface d'appui (80) s'étendant dans la direction périphérique et perpendiculairement à celle-ci pour l'application contre la périphérie extérieure de l'unité de tuyau (1), l'étendue perpendiculaire de la surface d'appui (80) étant inférieure à l'étendue maximale de l'élément (12) dans cette direction dans une région radialement adjacente, **caractérisé en ce que** l'élément (12) se rétrécit dans la direction radiale vers l'intérieur vers la surface d'appui (80) qui se trouve au centre axial de l'élément de type manchon (12), et **en ce que** l'élément (12), en vue en coupe transversale, présente un contour au moins approximativement triangulaire, et **en ce que** les deux régions d'extrémité (13, 14) sont connectées à un dispositif de serrage (100) amplifiant une force d'actionnement manuelle, le dispositif de serrage (100) présentant un élément d'actionnement en forme de levier (24 ; 53 ; 72) pouvant être actionné sans outil et manuellement pour serrer le dispositif de serrage (100).

2. Dispositif selon la revendication 1, **caractérisé en ce que** la surface d'appui (80) est au moins approximativement linéaire.

3. Dispositif selon l'une quelconque des revendications 1 ou 2, **caractérisé en ce que** l'élément (12) présente des coins arrondis.

4. Dispositif selon l'une quelconque des revendications précédentes, **caractérisé en ce que** le dispositif de serrage (100) est réalisé sous forme de connexion à boucle de serrage (15 ; 15a).

5. Dispositif selon la revendication 4, **caractérisé en ce que** la connexion à boucle de serrage (15) présente un étrier (18) fixé de manière pivotante au niveau d'une première région d'extrémité (13) de l'élément de type manchon (12), au niveau duquel est façonnée d'une seule pièce une portion de retenue (25) qui présente, du côté tourné vers la deuxième région d'extrémité (14) de l'élément de type manchon (12), un évidement (27) qui coopère avec une saillie (28) façonnée d'une seule pièce au niveau de la deuxième région d'extrémité (14).

6. Dispositif selon la revendication 5, **caractérisé en ce que** l'étrier (18) présente deux axes de type tourillon (21) qui viennent en prise dans des ouvertures de réception (22) réalisées dans l'élément de type manchon (12).

7. Dispositif selon la revendication 5 ou 6, **caractérisé en ce que** l'élément d'actionnement est réalisé en forme de plaque de préhension (24) au niveau de l'étrier (18), qui fait saillie obliquement dans la position de verrouillage de la connexion à boucle de serrage (15) depuis l'élément de type manchon (12) et qui peut de ce fait être saisie des deux côtés.

8. Dispositif selon l'une quelconque des revendications précédentes, **caractérisé en ce que** la connexion à boucle de serrage (15a) comprend une boucle d'articulation double (70) avec un étrier de retenue (71) et un étrier de serrage servant d'élément d'actionnement (72), lesquels sont connectés l'un à l'autre de manière articulée dans un axe (73).

9. Dispositif selon la revendication 8, **caractérisé en ce que** l'étrier de retenue (71) et l'étrier de serrage sont connectés l'un à l'autre par le biais d'une connexion à encliquetage, l'étrier de retenue (71) présentant une portion de retenue (76) qui vient en prise autour de l'axe (73), la portion de retenue (76) présentant une ouverture (77) pour l'introduction de l'axe (73), dont la largeur d'ouverture est supérieure au diamètre de l'axe (73).

10. Dispositif selon l'une quelconque des revendications précédentes, **caractérisé en ce que** le dispositif de serrage (100) sert à réaliser une connexion par encliquetage (65) entre les régions d'extrémité (13, 14) de l'élément de type manchon (12), l'élément d'actionnement (53) coopérant en liaison fonctionnelle avec une première géométrie de denture (45) réalisée au niveau d'une région d'extrémité (13) de l'élément de type manchon (12).

11. Dispositif selon la revendication 10, **caractérisé en ce que** l'élément d'actionnement (53) présente une portion (63) coopérant avec la première géométrie de denture (45), qui coopère avec la première géométrie de denture (45) à la manière d'un cliquet, de telle sorte que dans le cas d'un déplacement de l'élément d'actionnement (53) dans l'une des directions, la périphérie de l'élément de type manchon (12) soit rétrécie et que dans le cas d'un déplacement de l'élément d'actionnement (53) dans l'autre direction, l'élément de type manchon (53) conserve sa périphérie.

12. Système comprenant une unité de tuyau ainsi qu'un dispositif selon l'une quelconque des revendications précédentes, l'élément de type manchon (12) du dispositif entourant l'unité de tuyau et s'appliquant ainsi avec sa surface d'appui (80) contre la périphérie extérieure de l'unité de tuyau, la surface d'appui étant disposée au niveau d'une portion de surface d'enveloppe cylindrique de l'unité de tuyau réalisée sous forme de portion de tuyau lisse.

13. Système selon la revendication 12, **caractérisé en ce que** le dispositif présente un gauchissement dans la direction axiale.
